Europäisches Patentamt

(19) European Patent Office

Office européen des brevets

(11) Publication number : **0 496 154 A1**

(12) **EUROPEAN PATENT APPLICATION**

(21) Application number : **91310621.7**

(22) Date of filing : **18.11.91**

(51) Int. Cl.⁵ : **B29C 33/44, A47B 47/04**

(30) Priority : **16.11.90 GB 9024954**

(43) Date of publication of application :
**29.07.92 Bulletin 92/31**

(84) Designated Contracting States :
**AT BE CH DE DK ES FR GB GR IT LI LU NL SE**

(71) Applicant : **CASTLE NEROCHE (INTERIORS) LIMITED**
**Neroche House**
**Basonbridge, Somerset TA9 4RN (GB)**

(72) Inventor : **Willis, Gavin Rex**
**11 Ashleigh Close**
**Basonbridge, Somerset (GB)**

(74) Representative : **Bayliss, Geoffrey Cyril et al**
**BOULT, WADE & TENNANT 27 Furnival Street**
**London EC4A 1PQ (GB)**

(54) **Improvements in or relating to methods of manufacturing cupboard carcases.**

(57) The disclosure relates to a method of manufacturing a carcase for a cupboard unit comprising the steps of moulding an open fronted, open topped carcase (10) in a plastics material with the side walls (11, 12) of the carcase diverging towards a corner of the carcase at the juncture between the open top (15) and open front (17) to facilitate release of the carcase from the mould. After release from the mould the side walls (11, 12) of the carcase are brought parallel to one another.

FIG. 1.

EP 0 496 154 A1

This invention relates to methods of manufacturing cupboard carcases. Our U.K. Patent Application Nos. 9012299.5 and 9019775.7 disclose various forms of carcase contruction for cupboards in which the carcase comprise a one-piece moulded plastics liner providing the walls of the carcase.

This invention provides a method of manufacturing a carcase for a cupboard unit comprising the steps of moulding an open fronted, open topped carcase in a plastics material with the side walls of the carcase diverging towards a corner of the carcase at the juncture between the open top and open front to facilitate release of the carcase from the mould, releasing the carcase from the mould and securing the side walls of the carcase parallel to one another.

For example the side walls may each be moulded with a divergent angle of 5° to facilitate separation of the side walls from the corresponding surfaces of the mould.

According to a further feature of the invention the carcase is removed from the mould in a direction extending between the back and bottom walls of the carcase to facilitate separation of the carcase from the surfaces of the mould forming the latter part of the carcase.

More specifically the carcase may be separated from the the mould in a direction at an angle of about 5° to the back wall of the carcase.

In any of the above methods the mould may be formed to create a pair of carcases open top to open top to enable a pair of carcases to be produced in a single moulding operation after which the carcases are separated by severing.

In the latter case the mould may be formed to create the carcases with the open tops of the carcases facing in divergent directions to facilitate separation of the bottom and back walls of the carcases from the mould and the open tops of the carcases are trimmed parallel with the bottoms of the carcases after separation.

Also in any of the above methods the divergent side walls of the carcase may be secured together generally parallel with one another by a strut or panel secured in the open top of the carcase.

Again in any of the above methods sheet material such as chipboard, MDF, plywood or steel may be glued onto the outer faces of the carcase walls to reinforce the walls.

The sheet material secured to the underside of the bottom wall of the carcase may project beyond the bottom wall to receive the lower edges of the sheet material secured to the side walls of the carcase.

According to a further feature of the invention the outer faces of the side walls and/or bottom of the carcase may be formed with integral ribs or other reinforcing elements extending across the side wall to reinforce the walls of the carcase.

The following is a description of some specific embodiments of the invention, reference being made to the accompanying drawings in which:

Figure 1 is a plan view of a moulded plastics cupboard carcase in accordance with the invention;

Figure 2 is a front view of the carcase shown in Figure 1;

Figure 3 is a side view of the carcase shown in Figure 1;

Figure 4 shows a composite moulding of a pair of carcases;

Figure 5 is a section on the line A A on Figure 4;

Figure 6 is a plan view of the composite moulding of Figure 4;

Figure 7 is a plan view of a moulded carcase as shown in Figure 1 ready for installation under a worktop;

Figure 8 is a section on the line EB on Figure 7; and

Figures 9 to 11 show a modified form of the moulding of Figures 1 to 3.

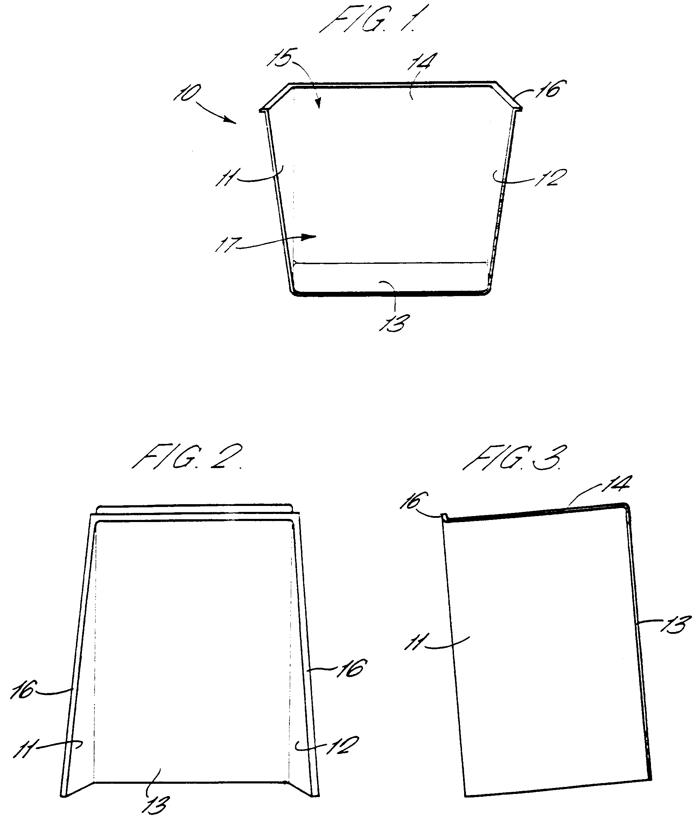

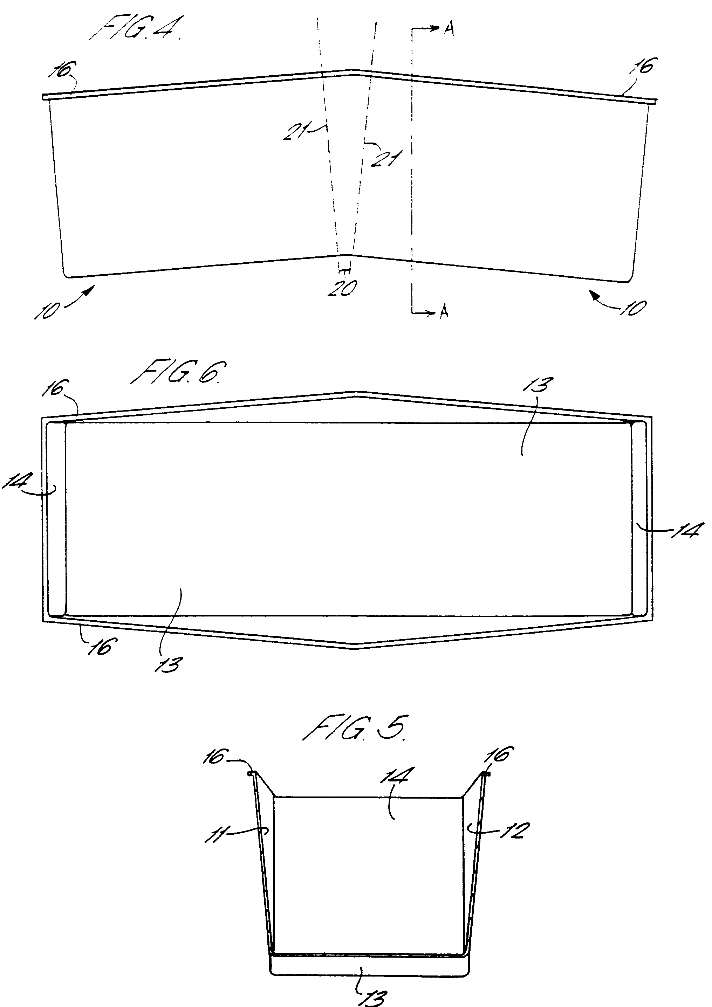

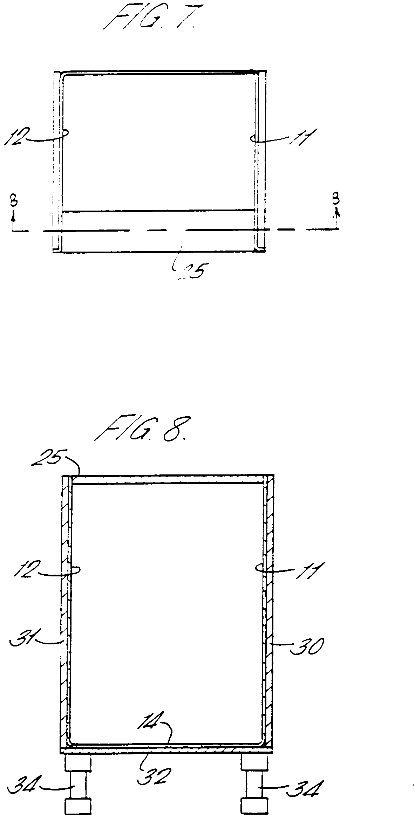

Reference is made firstly to Figures 1 to 3 of the drawings which illustrate a plastics moulded cupboard carcase indicated generally at 10 following separation of the carcase from the mould. The carcase has side walls 11, 12, respectively, a back wall 13 and a bottom wall 14. The carcase has an open front indicated at 15 and the edges of the side walls 11, 12 and bottom wall 14 encircling the open front have an out-turned integral flange 16. The carcase also has an open top 17.

The carcase is moulded with the side walls 11, 12 diverging towards the corner of the carcase between the open top and open front, each side wall being angled at about 5° to the parallel. The diverging or splaying of the side walls facilitates the separation of the carcase from the mould. In addition the carcase is separated from the mould at an angle of about 5° to the back wall 13 of the carcase to facilitate separation of the back and bottom walls of the carcase from the corresponding surfaces of the mould.

Once the carcase has been separated from the mould, a strut or panel is secured in the open top 17 of the carcase between the side walls to bring the side walls into parallel. The carcase is then mounted under a worktop as part of a cupboard in the manner described and illustrated in our Application Nos. 9012299.5 or 9019775.7.

The moulding of the carcase can be carried out using a variety of different moulding techniques such as resin transfer moulding (R.T.M.), sheet moulding compound (S.M.C.) or dough moulding compound (D.M.C.) or injection resin moulded compound techniques. If the mould tooling used is made from fibre reinforced plastics, shallow draw angles pose particular problems as the moulds are easily damaged. The provision of divergent side walls for the carcase and the angle of separation of the carcase from the mould as described above minimises the risk of damage.

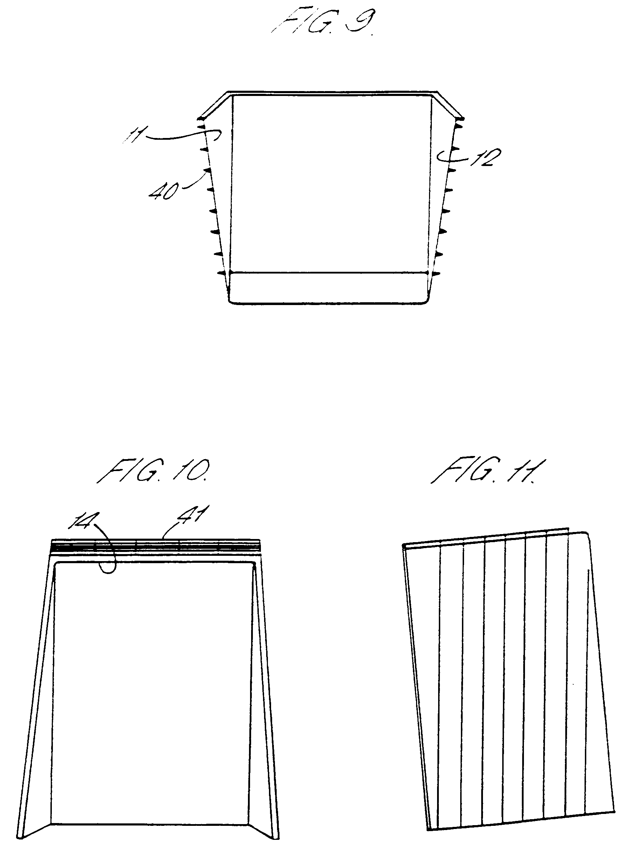

The arrangement also lends itself to the moulding of a pair of carcases in one as illustrated in Figures 4 to 6 to which reference will now be made.

A pair of carcases 10 is moulded open top to open top with a small divergent angle indicated at 20 between the respective carcases to provide a draw angle between the bottom and back walls of the carcases with respect to the corresponding mould surfaces to complement the draw angle provided between the side walls for the carcase and the respective surfaces of the mould provided by the divergents of the side walls.

Following separation of composite moulding from the mould, the two carcases are severed and the open top of each carcases trimmed back along the dotted lines indicated at 21 parallel to the respective bottom walls of the carcases.

Referring now to Figures 7 and 8 of the drawings, a rail or spacer bar 25 is shown inserted in the open top of the carcase between the side walls 11 and 12 and adjacent the open front of the carcase to bring the side walls into parallelism. In addition reinforcing and supporting sheets 30, 31 are secured by adhesive to the outer surfaces of the side walls 11, 12 of the carcase and sheet 32 is secured to the underside of the bottom wall 14 of the carcase. The sheet material may comprise chipboard, MDF, plywood or steel glued onto the outer surfaces of the carcase. This can provide a structural support for a worktop and also good screw holding for components to be secured in the cupboard. The side sheets 30, 31 may extend to the floor or, alternatively, the carcase can be supported on adjustable legs 34 as illustrated. In the latter case; the sheet 32 secured to the bottom wall of the carcase extends beyond the bottom wall to receive the lower edges of the sheets 30, 31 secured to the side walls. This avoids an adhesive joint being placed in sheer between the bottom sheet 32 and side sheets 30, 31.

Referring to Figures 9 to 11 of the drawings, there is shown a further modification in which the outer surfaces of the side panel 11, 12 are formed with parallel closely spaced horizontally extending integral ribs 40 on the external surfaces thereof to reinforce the panel and the bottom wall 14 is similarly formed with parallel integral ribs 41.

Sheet moulding compound techniques are particularly suitable for making small versions of the carcases described and by ribbing the sides and base of the carcase as illustrated in figures 9 to 11, the carcase can become a structural component easily strong enough to provide secure fastenings for all the internal components. This allows the frame work on either side of the carcase to be dispensed with.

Injection resin moulded compound techniques can also be used for production of these carcases, these being similar to sheet moulding compound techniques except that resin/fibre compound is injected into the mould.

## Claims

1. A method of manufacturing a carcase for a cupboard unit comprising the steps of moulding an open fronted, oven topped carcase in a plastics material with the side walls of the carcase diverging towards a corner of the carcase at the juncture between the open top and open front to facilitate release of the carcase from the mould, releasing the carcase from the mould and securing the side walls of the carcase parallel to one another.

2. A method as claimed in Claim 1 wherein the side walls are each moulded with a divergent angle of 5° to facilitate separation of the side walls from the corresponding surfaces of the mould.

3. A method as claimed in Claim 1 or Claim 2 wherein the carcase is removed from the mould in a direction extending between the back and bottom walls of the carcase to facilitate separation of the carcase from the surfaces of the mould forming the latter part of the carcase.

4. A method as claimed in Claim 3, wherein the carcase is separated from the mould in a direction at an angle of about 5° to the back wall of the carcase.

5. A method of moulding a carcase as claimed in any of the preceding claims wherein the mould is formed to create a pair of carcases open top to open top to enable a pair of carcases to be produced in a single moulding operation after which the carcases are separated by severing.

6. A method as claimed in Claim 5 wherein the mould is formed to create the carcases with the open tops of the carcases facing in divergent directions to facilitate separation of the bottom and back walls of the carcases from the mould and the open tops of the carcases are trimmed parallel with the bottoms of the carcases after separation.

7. A method as claimed in any of the preceding claims wherein the divergent side walls of the carcase are secured together generally parallel with one another by a strut or panel secured in the open top of the carcase.

8. A method as claimed in any of the preceding claims wherein sheet material such as chipboard, MDF, plywood or steel is glued onto the outer faces of the carcases.

9. A method as claimed in Claim 8 wherein the sheet material secured to the underside of the bottom wall of the carcase projects beyond the bottom wall to receive the lower edges of the sheet material secured to the side walls of the carcase.

10. A method as claimed in any of Claims 1 to 6, wherein the outer faces of the side walls and/or bottom of the carcase may be formed with integral ribs or other reinforcing elements extending across the side wall to reinforce the walls of the carcase.

12. A method of moulding a carcase for a cupboard unit substantially as described with reference to and as illustrated in the accompanying drawings.

FIG. 1.

FIG. 2.

FIG. 3.

FIG.4.

FIG.6.

FIG.5.

FIG. 7.

FIG. 8.

FIG. 9.

FIG. 10.

FIG. 11.

**European Patent Office**

# EUROPEAN SEARCH REPORT

Application Number

EP 91 31 0621

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3 688 384 (MIZUSHIMA ET AL) <br> * abstract; figures * <br> * column 5, line 10 - line 30 * <br> ----- | 1-12 | B29C33/44 <br> A47B47/04 |
| | | | TECHNICAL FIELDS SEARCHED (Int. Cl.5 ) <br><br> B29C <br> A47B |

The present search report has been drawn up for all claims

| Place of search | Date of completion of the search | Examiner |
|---|---|---|
| THE HAGUE | 27 MAY 1992 | SCHöLVINCK T.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)